# EUROPEAN PATENT APPLICATION

(11) **EP 1 122 661 A1**
(43) Date of publication of application: **08.08.2001**
(21) Application number: 00300741.6
(22) Date of filing: 31.01.2000
(51) Int. Cl.: G06F 17/60

(54) **Improvements relating to data distribution**

(71) Applicant: Brainpower S.A., 6900 Lugano (CH)
(72) Inventor: Pellegrinelli, Rocco, 6977 Ruvigliana (CH); Spampinato, Luca, 21012 Cassano Magnago (VA) (IT); Bottarelli, Sandro, 6900 Lugano (CH)
(74) Representative: Ahmad, Sheikh Shakeel

(57) **Abstract**

A method of distributing performance data concerning a plurality of subjects (such as stock market companies) from a distribution site to a user site is described. The method comprises storing gathered performance data concerning each of the subjects in a central database, where the storing step comprises storing the gathered data to form a contiguous sequential block of historical data for each subject. The method also includes, on request from the user, providing a stream of historical data from the blocks in the central database such that a ticker tape of a plurality of graphical historical data charts can be displayed at the user's site, automatically and without user interaction.

## Description

The present invention concerns improvements relating to data distribution and more particularly, though not exclusively, to a method of and system for distributing updated performance data to customers over a communications network such as the Internet. The data is typically daily updated stock market (securities) information obtained from different data vendors. The data can be accessed via a Graphical User Interface (GUI) in the form of an interactive ticker tape.

Stock market results generate vast amounts of financial data which are indicative of the performance of the traded securities each day. This performance information is distributed in various ways to data gathering companies who in turn supply it to subscribing customers requiring the information. Electronic performance data vendors provide dedicated communication links into their databases for the data gathering companies to have direct access to the performance information they require. More recently, with the advent of Wide Area Networks (WANs), such as the Internet, it has been possible for data gathering companies to access several electronic performance data vendors' databases and also to distribute performance data to subscribing customers by use of general purpose communications equipment.

Financial performance data provided by each electronic performance data vendor presents a huge mass of information which can be provided to the customer. It is not practical to provide all of this data to the user at once because of the limited amount of data that can be presented on the user's screen and also because this would be highly inefficient (providing information that is of no interest to the customer). Data gathering companies often divide this mass of data into smaller sets of grouped data and, for example with the Internet, the groups of data are presented through a hierarchical web page structure. The customer can then be presented with different web pages showing different data. For example, the customer can be presented with lists of current stock prices on one page and by selecting a link from a specific security, a chart of historical performance data concerning the selected subject can be generated on the next web page.

The performance data received by the customer is often displayed in a table format showing each security and how it has performed since its close of business the previous day. Typically, there is a positive or negative movement number adjacent the displayed current security value (stock price for example) showing the size and direction of movement of the security value since the last update.

Another way of displaying the security values is to use a ticker tape. By scrolling the received security values (and their movement numbers) across a portion of the customer's screen, typically a frame, it is possible for the customer to view a variable size of performance data without altering the format of the screen. Also, as only a portion of the screen is taken up by the ticker tape, the customer can use the rest of the screen for other applications but still keep an eye on movements of selected securities.

A typical application of this ticker tape for displaying securities performance data is described in WO-A-99/16181. Here the performance information is obtained on a portable mobile phone via the Internet using a WAP (Wireless Application Protocol).

The most common application of ticker tapes has been to display alphanumeric data relating to the real-time performance of securities. Accordingly, the use of ticker tape displays has been restricted to the display of only basic text information due to the relatively short time which is available to display each new item of the ticker tape as it moves.

The present invention resides in an improvement in the known methods and systems for distributing updates of performance data. The inventor has appreciated that it is advantageous to provide to the customer with a stream of historical data relating to the performance of a subject (security) such that it can be displayed graphically in a ticker tape format. This information can give the customer an immediate appreciation of trends in the performance of the stock and whether or not it is advantageous to take some action (buy or sell stock) in view of this.

According to one aspect of the present invention there is provided a method of distributing performance data concerning a plurality of subjects from a distribution site to a user site, the method comprising: storing gathered performance data concerning each of the subjects in a central database, wherein the storing step comprises storing the gathered data to form a contiguous sequential block of historical data for each subject; and on request from the user, providing a stream of historical data from the blocks in the central database such that a ticker tape of a plurality of graphical historical data charts can be displayed at the user's site, automatically and without user interaction.

The benefit of this graphically displayed historical data is that the customer can immediately, without any user interaction, place the daily price variation of the security into the context of a medium term price chart in order to gain a broader prospective of the price action within a trend. In these cases, the specific current value of the performance data is also displayed with each historical data chart.

For the avoidance of doubt, the term performance data is intended to mean data which represents the current values of financial securities which can fluctuate in value over a given time period, such as stocks, shares, funds and bonds. Also the term historical data is intended to mean data that represents the history of the performance data over a period of time. As such, the term historical data is intended to cover more than just a single value which is representative of the penultimate value of the performance data such that an indication of whether the stock has increased or decreased can be determined.

It is to be appreciated that the term ticker tape as used herein has its normal meaning of a series of discrete data items being scrolled across part of a screen. This stream of data is moved at a rate at which the data can be read by a user.

By providing the historical data graphically, the amount of information provided to the user is advantageously maximised within a minimum space allocation. This results in a further advantage in that the user can then access the data via a GUI (Graphical User Interface) which is in the form of a ticker tape.

The rate of generation of the graphical historical data charts may correspond to the speed of movement of the ticker tape displayed at the user's site. This is the minimum rate required to sustain an apparently real-time display at the user's site.

The storing step may comprise storing the gathered performance data in the historical data blocks such that each block is partitioned according to predetermined different time periods. Preferably, the historical data blocks are each partitioned in daily, weekly, monthly and yearly time periods. The advantage of this is that it speeds up data retrieval from the central database because the data access primitives can sample the mass of historical data to extract only those values at the appropriate partitions rather than going through all of the stored data, in order to construct the appropriate historical data chart.

The method may further comprise gathering performance data at a central site and subsequently updating the distribution site with the gathered data. In this way, a distributed data system can advantageously be implemented the responsibility of gathering the raw data at regular time intervals being removed from the data supplying function of the distribution site.

The gathering step may comprise downloading performance data from a plurality of electronic data vendors where two or more data vendors have different data distribution protocols, and for each data vendor having a different data distribution protocol, the method may further comprise implementing an appropriate communications protocol for downloading performance data from each data vendor. This enables the central site to process data from different data vendors even if they employ different communication protocols.

The gathering step preferably comprises consolidating, integrating and reformatting gathered performance data from the plurality of data vendors. In order to place the data into a standard format, it is necessary to strip the gathered data down to its raw data and then reformat it and combine it with other data. The uniformity of the stored data is essential for efficient further distribution of the data to users.

As mentioned previously, the providing step is initiated on demand and preferably this is by a data request from the user. The request may include identity information identifying the user, and the method may further comprise accessing a user configuration file describing a required data configuration for the identified user, or for a newly identified user, creating a new user configuration file set to a default configuration. In this way, advantageously information about the user can be stored at the distribution site and be used to configure the same user's GUI when he or she next connects to the distribution site.

In an embodiment of the present invention, the communications network is the Internet and the identity information comprises a cookie file initially sent to the user. This is a simple way of using existing technology to provide the desired user information.

The method may further comprise storing the user configuration files and identity information in a relational customer database and accessing the same using Structured Query Language. In this way, a multitude of customer information can be collected and accessed in an intelligent and fast manner.

The providing step preferably further comprises sending a user configuration file to its user together with a data handling function arranged to present to the user the historical data in accordance with the user configuration file. Previously stored user preferences can be sent to the user together with a program for configuring the user's GUI to handle the download of information and its presentation, without user interaction.

In an embodiment of the present invention, the communications network is the Internet and the data handling function comprises an applet. This is also a simple, yet powerful, way of implementing the handling function using existing technology.

Preferably, the data handling function configures a user's screen according to the information in the configuration data file and requests specific historical data from the central database for immediate display. As mentioned previously, this automises the distribution process.

The step of using the handling function may comprise arranging the historical data into charts and to display simultaneously a plurality of charts arranged as an endless stream of moving graphical images forming a ticker tape on a user's screen. Ticker tape type displays of information are a neat way of displaying information at a readily comprehensible rate within a relatively small section of a user's screen. Use of the handling function to perform this function increases the functionality of the handling function thereby minimising the requirement for additional separate software modules.

The step of using the handling function may comprise configuring the remote user's screen to control the amount and type of performance data to be displayed. This advantageously acts as a filter which prevents the limited amount of information that is continually being displayed to the remote user from being irrelevant and of little or no interest.

The storing step which updates the central database is preferably carried out on a daily basis. This provides a basic unit of historical data for storage in the central database and advantageously corresponds to the conventional time periods when prices of securities are compared. The central site is often being updated from data vendors all over the world resulting in almost a continuous gathering procedure. However, due to the distributed nature of the system, the storing step at distribution site need only be carried out on a daily basis to provide the required updating of the central database.

According to another aspect of the present invention there is provided a system for distributing performance data concerning a plurality of subjects from a distribution site to a user site, the system comprising: a central database of performance data relating to each of the plurality of subjects, storing means for storing gathered performance data concerning each of the subjects in the central database, the storing means being arranged to store the data to form a contiguous sequential block of historical data for each subject; and read out means arranged to provide, on request from the user, a stream of historical data from the blocks in the central database such that a ticker tape of a plurality of graphical historical data charts can be displayed at the user's site, automatically and without user interaction.

The present invention also extends to a configurable ticker tape interface for providing performance data regarding a plurality of subjects stored in a remote database, the ticker tape interface being arranged to be configurable by the user to specify a subset of the plurality of subjects, to obtain current performance data and historical data from the remote database regarding the selected subset of subjects, and to generate user-controlled movable icons of the ticker tape interface, each icon representing the current performance data and historical data for selected subject in a graphical format.

Ticker tape displays are a neat way of displaying information at a readily comprehensible rate and also in a way that allows the user to view something else on screen. A limitation with the use of ticker tape displays has been that only a limited amount of alphanumeric data has been displayable to the user. The present invention utilises the advantages of the ticker tape format and increases the amount of information that can be provided to the user by using graphical icons representing the mass of historical data for each subject. Control of how the ticker tape interface is configured enables the user to predetermine the type of performance data that they which to be shown. This combination of moving graphical icons and preselection of subject types provides a synergistic effect in that the ticker tape interface can provide access to an enormous amount of different performance data whilst still maintaining the relevance of that information to the user's requirements.

The present invention can also be considered to be a graphical user interface comprising: processing means for obtaining updated information from a distribution database regarding a plurality of subjects and processing the obtained information to display a moving set of graphical images, each image representing current performance data and historical data for a given subject; and selecting means for creating a user selection, the selecting means being arranged to configure the processing means to obtain information for a selection of the plurality of subjects stored in the distribution database.

Preferably, the GUI further comprises selection means, operable by the user, for selecting a time period of historical data, smaller than that stored in the distribution database for a given subject, which is to be displayed in the set of graphical images. Accordingly, the user can select the time frame which is of interest for the historical data of each security that is to be graphically displayed. This is typically between one and five years.

The GUI may further comprise control means, operable by the user, for altering the movement of the set of graphical images. As each of the graphical images should be able to be read by the user, and different users have different reading speeds, this feature advantageously allows the user to set the movement of the set of graphical images (scrolling speed of a ticker tape for example) to their desired comfortable reading speed.

Preferred embodiments of the present invention will now be described by way of example with reference to the accompanying drawings. In the drawings:
Figure 1 is a schematic block diagram of an updated performance data distribution system embodying the present invention;
Figure 2 is a flow diagram showing a method of updating the market database shown in figure 1 with information from data vendors;
Figure 3 is a schematic diagram of the performance distribution system of Figure 1 showing the data flow from the data vendors to the customers over the Internet; and
Figure 4 is a screen image of a ticker tape graphical user interface provided at a customer's site in Figure 3.

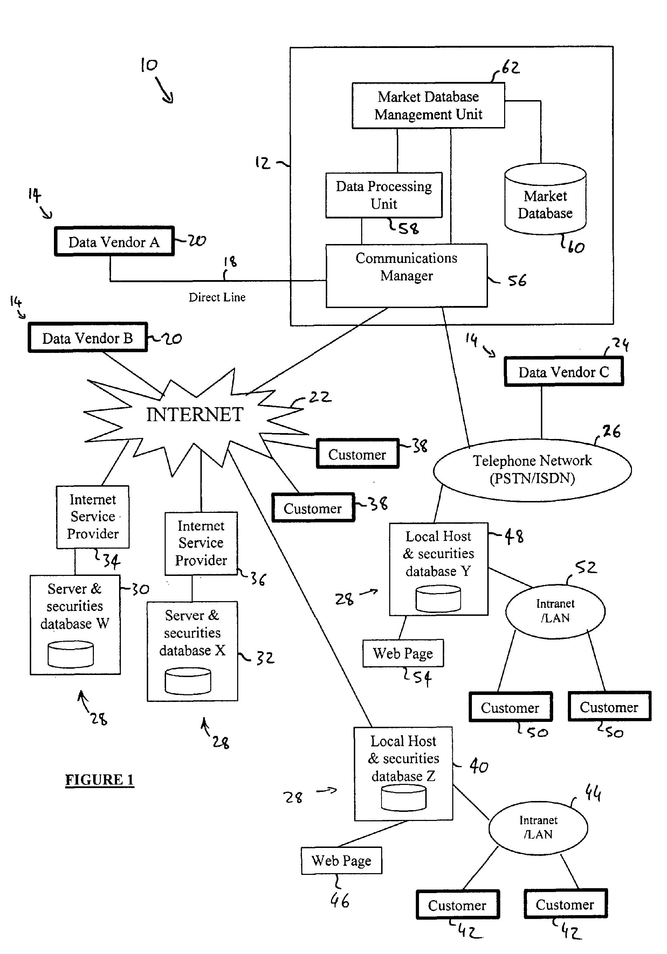

Referring now to Figure 1, there is shown an updated performance data distribution system 10 embodying the present invention. The system 10 is configured to gather, on a daily basis, performance data relating to the current values of securities such as stocks, funds and shares from stock markets all over the world. This current data can then be collated and supplied to customers together with additional historical data derived from the current data. Given the number of subjects (stocks, funds and shares for different companies) to be covered and the volume of historical data for each subject (typically daily information going back several years), the historical data for each subject is presented graphically as an element of a ticker tape as is described in detail in hereinafter.

The system 10 comprises a central data processing site 12 that is connected to three data vendors 14 by different communication channels. Data vendor A 16 is connected directly to the central data processing site 12 through a direct telecommunication line 18. Data vendor B 20, who may be located in a different country, is connected to the central data processing site 12 via the Internet 22. Data vendor C 24 is connected to the central data processing site 12 directly through a public telephone network 26 such as a PSTN or ISDN.

The central data processing site 12 thus receives data from a plurality of sources 14. The received data is cleaned up, collated, integrated and stored within the central data processing site 12. The exact way in which this data is processed is described in detail later. Selected data is then distributed, in this embodiment, to each of four local data distribution sites 28 that may also be in different countries of the world.

The central processing site 12 is coupled to a local data distribution site W 30 and a local data distribution site X 32 via the Internet 22. More specifically, local data distribution sites W and X 30, 32 are each servers with their own securities database hosted by a respective Internet Server Provider (ISP) 34, 36. Each of these distribution sites 30, 32 has a web page (not shown) which is accessible to its subscribing customers 38 via the Internet 22.

A local data distribution site Y 40 is directly connected into the Internet 22 for data communication with the central data processing site 12. This distribution site 40 has a local securities database for storing received information and provides a local host for its customers 42 via an Intranet or LAN (Local Area Network) 44. The customers 42 obtain the information distributed to the local distribution site 40 by accessing its local web site 46.

A local distribution site Z 48 is directly connected into the public telephone network 26 for data communication with the central processing site 12. This distribution site 48 has a local securities database for storing received information and provides a local host for its customers 50 via an Intranet or LAN (Local Area Network) 52. The customers 50 obtain the information distributed to the local distribution site 48 by accessing its local web page 54.

The central processing site 12 comprises a communications manager 56, a data processing unit 58, a market database 60 and a market database management unit 62. The communications manager 56 handles all the data communications to and from the central processing site 12, namely to and from the data vendors 14 as well as to and from the local distribution sites 28. The communications manager 56 includes hardware and software supplied by some of the data vendors 14 for handling each of their specific data transmission protocols as well as their specific formats of data. This special equipment is configured to optimise the often-large data transfers. Others data vendors, such as data vendor B 16, simply provide an Internet address and a password for accessing the data at their Internet site.

Different data vendors have different ways of supplying performance data to the central processing site. Performance data is broadcast by some of the data vendors at regular intervals to subscribers, such as the central processing site 12. Other performance data has to be obtained on demand. Some data vendors provide data in real time and others provide the data as snapshots on a daily basis. As the performance data from the different data vendors is in different formats, the data vendors 14 provide specific data structure specifications, setting out how the data will be sent, which are stored at the central processing site 12 and used in extracting the desired information from the received data.

The data processing unit 58 receives the raw performance data from the communications manager 56 and transforms it into a uniform format. The market database management unit 62 takes the transformed data and stores it in the market database 60 in an appropriate way for ease of access. The market database management unit 62 also handles the retrieval of selected performance data for transfer to the local data distribution sites 28 via the communications manager 56.

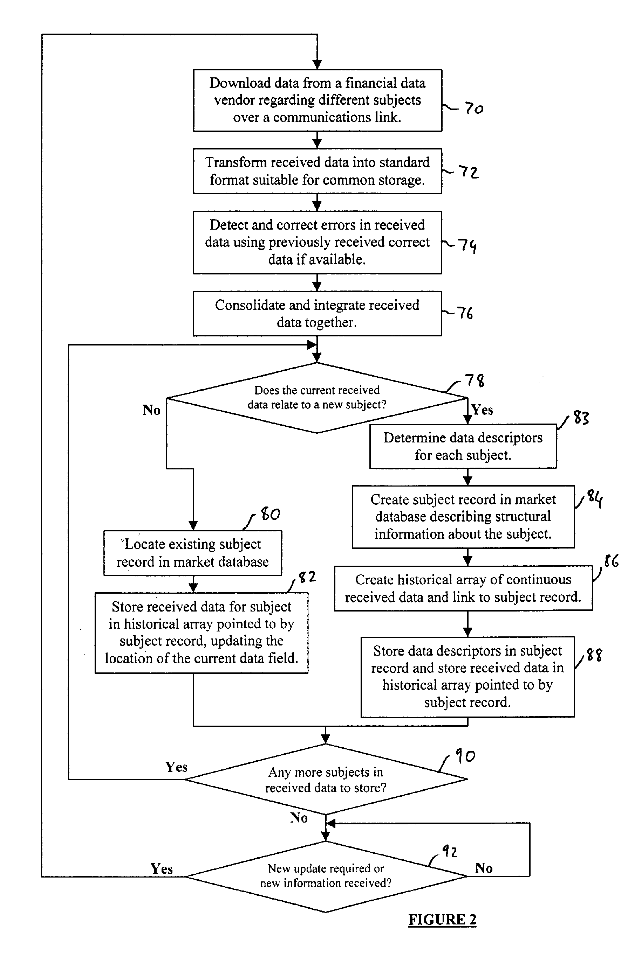

Referring to Figure 2, the method of accumulating performance data from the different data vendors 14 and storing it in the market database 60 is now described in detail. The method commences at 70 with the downloading of performance data from a financial data vendor 14 over a communications link. The performance data is provided on hundreds of companies, funds and stocks from one or more markets, for example from the New York and London Stock Markets, with each different stock, fund or company being considered as a different subject. The different ways in which this data is transferred has been mentioned previously.

The data processing unit 58 transforms the downloaded data at 72 into a standard format suitable for storage in a common database (the market database 60). This procedure requires accessing the stored information regarding the data format used by each particular data vendor 14 and using this information to strip out the required information; for example the name of the subject and the current stock market value of its shares in a particular market.

The data processing unit 58 then detects and corrects errors in the received data at 74. This is carried out in a two-stage process. The first stage involves a computer program considering the received data and compiling a ranked list of potential errors. The second stage involves selecting likely errors for correction and correcting them on the basis comparison with previously received correct performance data for the subject. The error-corrected data is then consolidated and integrated together at 76 for storage in the market database 60 on a subject by subject basis.

The market database 60 stores the performance data on a subject by subject basis. Prior to the received error-corrected data being stored, a check is carried out at 78 to determine whether the current subject, for which performance data is to be stored, is one which has an existing data entry in the database 60. This can be simply achieved by checking a running list of subjects in the database 60. If the subject is not new, then the existing record pertaining to this subject is located at 80 in the market database 60 and the received performance data for this subject is stored at 82 in that record.

The exact manner of updating the existing data record in this way is dependent on the data structures used in the database. In this particular embodiment, slightly different data structures are used for different types of subject, stocks are different from funds for example. However, in general, a two-part record structure for each subject is used. The first part of the record structure is a flat record of fixed size containing all the structural information (data descriptors such as market, sector, capitalisation, etc.) about the subject and a pointer to the second part of the structure. The second part is an array of historical performance data regarding the subject, storing the historical data sequentially and contiguously.

The historical data array stores the value of the subject on a daily basis, daily prices of a stock for example, in a contiguous and sequential manner without any stored sums or statistics. The data is partitioned according to a set of time frame periods which determine the granularity of the historical data namely, daily, weekly, monthly and yearly. The purpose of this sequential storage and partitioning is to enable rapid access to and retrieval of selected data from the often large mass of historical data for a subject. For example, historical data over a five-year period on a daily basis is commonly stored in the historical data array. Also by storing the historical data in this way, the granularity of data retrieval can be handled without difficulty as the positional relationships of the historical data is predetermined.

Turning back to the result of the check carried out at 78 to determine whether the current subject, for which performance data is to be stored, is one which has an existing data entry in the market database 60. If the subject is new, then structural information (data descriptors such as market, sector, capitalisation, etc.) for each subject are determined at 83. Each data descriptor is simply a grouping that helps in the data retrieval stage when a customer 38, 42, 50 may require the retrieval of only particular groupings of relevant data. Then a first part of a two-part subject record is created at 84 in the market database 60; the first part is arranged to store the newly created structural information (data descriptors) describing the subject. Subsequently, a historical array (second part of the subject record) for storing continuous received performance data is created at 86 and a pointer (not shown) to this second part is added to the first part of the subject record.

Once the subject record has been created at 84 and 86, the received data for a given subject is then stored at 88 in both the first and second parts of the record. More specifically, the newly created data descriptors are stored in the first part and received data is stored at a starting position for the contiguous data in the historical array. Also a list bearing the names of all subjects may then be updated as appropriate.

A check is then carried out at 90 to determine whether there is further data on any of the subjects in the received data that needs to be stored in the market database 60. If there is further data to be stored, then the above procedure at 78, 80, 82, 84, 86, 88 for storing the received information in the market database 60 is repeated for all of the different subjects about which information has been received at 70.

Once all the received data has been loaded into the market database 60, the method waits at 92 until a new update is required or new information has been received. When new information is to be obtained, the above-described steps of the method are repeated.

Having accumulated the data at the central processing site 12, this data is then distributed to the local data distribution sites 28 according to the specific services to be provided by each local site 28. Typically, the central processing site 12 is run by a first company and the local data distribution sites 28 are run by second companies who pay a subscription fee to the first company for the services provided.

Each local site 28 has a securities database that has the same data structure format as the market database 60. Each securities database is accessible to its customers 38, 42, 50 through a web page 46, 54 of the server. Usually each securities database stores a copy of all of the data which is maintained in the market database 60 such that, if required, customers 38, 42, 50 have access to the full range of performance data. However, some securities databases may only retain a predetermined subset of the subjects or markets stored in the market database 60. In these cases, the second companies may pay a reduced subscription fee to the first company.

The way in which data is transferred from the local sites 30, 32 to particular customers 38 over the Internet 22 is now described by way of example. The other local sites 40, 48 transfer data in a different way which is dependant on the specific protocols implemented on their Intranet or LAN 44, 52. However, the principles described below of how data is supplied to the Internet customers 38 applies equally to the operation of these other local sites 40, 48.

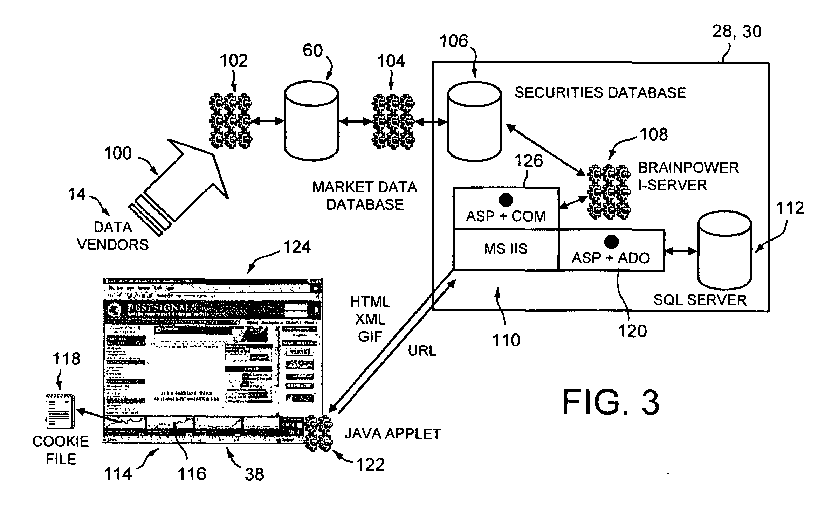

Referring now to Figure 3, flow of data from the data vendors 14 to the Internet customers 38 is shown schematically. As mentioned previously, market data are downloaded daily 100 from the different data vendors 14 using specific and usually different protocols and technological media for each data vendor 14. As there are several data vendors, each providing data on different subjects, the downloading procedure occurs almost continually. Data are consolidated, integrated and cleaned up 102 by proprietary software in the central processing site 12 and the received data is stored in the market database 60.

A proprietary procedure 104 updates the local data distribution site 28, 30 on a daily basis with new performance data. The data is stored in the securities database 106 that is based on proprietary technology and is highly optimized for the storage and rapid retrieval of historical numerical series. As mentioned previously, the structure of the securities database 106 is the same as that of the market database 60. This data structure is specifically implemented to provided fast access to records and the historical data provided therein. Accordingly, the access primitives used to retrieve data operate at relatively high speeds.

The local data distribution site 28, 30 comprises a securities database server 108, communications server 110 and an SQL relational database 112 which stores customer information and customer defined data configurations. The communications server 110 handles the real-time communications between the customer 38 and the local data distribution site 28, 30. Furthermore, the communications server 110 provides data access to the securities database 106 via the securities database server 108 and to the SQL relational database 112.

Each customer accesses the local data distribution site 28, 30 via an Internet browser running on their own computer (not shown). The data to be supplied from the local data distribution site 28, 30 to the customer 38 takes the form of a ticker tape 114 of charts 116 as will be described in detail later.

When a page or frame containing a reference to the ticker tape 114 is requested by a customer browser over the Internet 22, the contents of a specific cookie file 118 on the customer computer is sent with the identity of the customer (for known customers) to the local data distribution site 28, 30. The specific configuration associated with the customer identity is retrieved from the SQL (Structure Query Language) database 112 by an ASP (Active Server Page) 120 that makes use of an ADO (Active Database Object?) COMs (Component Object Models) in the communications server 110. Customer configuration may include an explicit set of security identities or a set of selection criteria. For unknown customers, a default configuration is generated.

A proprietary Java applet 122 is then downloaded from the communications server 110 to the customer 38, together with the configuration information retrieved from the SQL relational database 112. The applet 122 interprets the configuration information, configures the customer's display 124 and generates a stream of URLs (Universal Resource Locators) which are forwarded to the local data distribution site 28, 30 for each of the charts 116 of the ticker tape 114 to be displayed. The URLs are generated sequentially as each URL that makes up the ticker tape 114 is to be displayed on the user's screen. Accordingly, the rate at which the ticker tape is being moved corresponds to the rate of generation of the stream of URLs.

For each URL received, the communications server 110, through a proprietary COM (server component) within another ASP 126 of the communications server 110, interacts with the proprietary securities database server 108 and asks for the generation of a chart 116. The requested charts 116 are generated in GIF (Graphics Interchange Format) and are downloaded as a sequential stream of data to the applet 122 at the customer 38. The applet 122 displays the requested charts 116 on the screen 124 in the form of the moving ticker tape 114. In this way, several charts are displayed and moved at any instant in time.

When the finite number of requested charts 116 have been displayed (one loop of the ticker tape 114), the sequence of displaying the charts 116 is repeated. However, rather than downloading this information for a second time, the originally received data which has been cached is used to generate the sequence to be repeated.

Each ticker tape chart 116 is of a fixed time period, one year in this embodiment. However in alternative embodiments of the present invention, not only can this time period be fixed to a different value but also it can become a user-definable factor which is set by the user when the desired subject groupings are selected.

The applet 122 also permits a detailed expanded static display of each chart 116 together with the data descriptors of the subject, by the customer simply selecting the chart 116 by a mouse click. In order to provide the desired static display, with potentially a maximum level of detail, the mouse click generates a new URL which is sent to the local data distribution site 28, 30 to access the desired historical data and generate an appropriate GIF chart 116.

How the graphical representation is to be displayed is also selectable, for example in the form of a line graph, an area graph or a bar graph. Also the customer 38 can select the time period each chart 116 is to cover (one to five years for example) and the granularity of the data to be displayed (daily, weekly, monthly for example). The selected options which relate to the way in which the historical data is to be presented, simply determine how historical data is to be extracted from the second part of the subject records in the securities database 106.

When the communications server 110 searches the securities database 106 for a particular subject in order to generate its corresponding historical data chart 116, the access primitives (not shown) used to obtain the data from the securities database 106 are optimised to allow fast access to the relevant data granularity (daily, weekly, monthly, etc.) and a very fast retrieval of the historical data. This speed is due to the contiguous storage of consecutive historical performance data in the securities database 106.

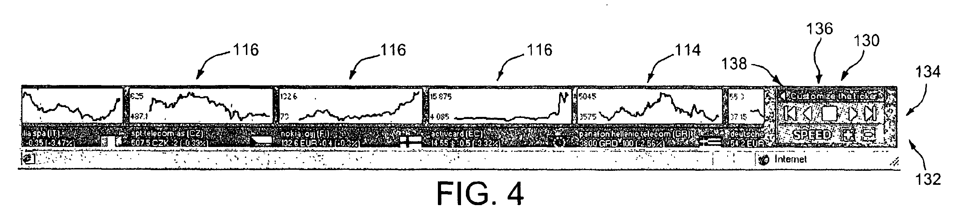

The format and operation of the ticker tape 114 is now described with reference to Figure 4. The ticker tape 114 provides a GUI (Graphical User Interface) for the Internet customer 38. The main portion of the ticker tape 114 displays moving charts 116, one for each of the securities of interest to the customer 38. A smaller portion of the ticker tape 114 provides control buttons 130 which generate, on selection, commands for controlling the operation of the ticker tape 114 on the customer's screen 124.

The applet 122 interprets the customer's selection of a control button 130 as a command and, in response, controls the movement of the ticker tape 114. For example, the customer can by clicking on the speed buttons 132 accelerate and slow down the ticker tape speed. Also the direction of scrolling can be changed using the directional arrow buttons and even a stop button 136 is provided.

The customer 38 can also select the type of securities that are to be displayed in the ticker tape 114. The control buttons 130 include a configuration button 138 for this purpose. When the customer 38 clicks on the configuration button 138 of the ticker tape 114, the URL of a specific configuration page is generated.

The configuration page presents customer selectable options for the types of securities that are to be displayed. For example, the type of securities to be displayed can be selected by country, region, past performance criteria, stock type, etc. The options presented to the customer correspond to the data descriptors (groupings) of the first part of each subject record provided in the securities database 106. The selected options which relate to the way in which the historical data is to be presented, simply determine how historical data is to be extracted from the second part of the subject records in the securities database 106. It is the provision of these data descriptors that in each subject record which enable rapid grouping of relevant data according to a customer's specific configuration.

The customer 38 makes a selection and a list of the selection criteria of the securities to be included in the ticker tape 114 is created. This list is then stored in the SQL relational database 112 as the specific configuration information for this customer and is used subsequently for the generation of each new chart 116 for this customer 38.

After a customer has configured the ticker tape 114, the applet 122 restarts the information request procedure from the retrieval of the specific configuration information.

The proprietary components on the server side of the above-described embodiment are implemented in the C++ programming language using COM interfaces.

Having described a particular preferred embodiment of the present invention, it is to be appreciated that the embodiment in question is exemplary only and that variations and modifications, such as will occur to those possessed of the appropriate knowledge and skills, may be made without departure from the spirit and scope of the invention as set forth in the appended claims. For example, it is to be appreciated that the above is the presently preferred implementation of the present invention. The use of Microsoft™ ASP, ADO, MS IIS, COM as well as Java can readily be substituted with equivalent technology. It would also be possible for the performance data to be distributed to mobile user's telephones using WAP (Wireless Application Protocol). This provides a powerful way in which customer's can be kept updated with stock market information even when not at their desks.

## Claims

1. A method of distributing performance data concerning a plurality of subjects from a distribution site to a user site, the method comprising:
storing gathered performance data concerning each of the subjects in a central database, wherein the storing step comprises storing the gathered data to form a contiguous sequential block of historical data for each subject; and
on request from the user, providing a stream of historical data from the blocks in the central database such that a ticker tape of a plurality of graphical historical data charts can be displayed at the user's site, automatically and without user interaction.

2. A method according to Claim 1, wherein the stream of historical data is provided as a stream of graphical data.

3. A method according to Claim 1 or 2, wherein a rate of generation of the graphical historical data charts corresponds to the speed of movement of the ticker tape displayed at the user's site.

4. A method according to any preceding claim, wherein the storing step comprises storing the gathered performance data in the historical data blocks such that each block is partitioned according to predetermined different time periods.

5. A method according to Claim 4, wherein the historical data blocks are each partitioned in daily, weekly, monthly and yearly time periods.

6. A method according to any preceding claim, further comprising gathering performance data at a central site and subsequently updating the distribution site with the gathered data.

7. A method according to Claim 6, wherein the gathering step comprises downloading performance data from a plurality of electronic data vendors where two or more data vendors have different data distribution protocols, and for each data vendor having a different data distribution protocol, the method further comprises implementing an appropriate communications protocol for downloading performance data from each data vendor.

8. A method according to Claim 6 or 7, wherein the gathering step comprises consolidating, integrating and reformatting gathered performance data from the plurality of data vendors.

9. A method according to any preceding claim, wherein the providing step is initiated by a data request from the user.

10. A method according to Claim 9, wherein the request includes identity information identifying the user, and the method further comprises accessing a user configuration file describing a required data configuration for the identified user, or for a newly identified user, creating a new user configuration file set to a default configuration.

11. A method according to Claim 10, wherein the communications network is the Internet and the identity information comprises a cookie file initially sent to the user.

12. A method according to Claim 10 or 11, further comprises storing the user configuration files and identity information in a relational customer database and accessing the same using Structured Query Language.

13. A method according to any preceding claim, wherein the providing step further comprises sending a user configuration file to its user together with a data handling function arranged to present to the user the historical data in accordance with the user configuration file.

14. A method according to Claim 13, wherein the communications network is the Internet and the data handling function comprises an applet.

15. A method according to Claim 13 or 14, wherein the data handling function configures a user's screen according to the information in the configuration data file and requests specific historical data from the central database for immediate display.

16. A method according to Claim 15, wherein the providing step comprises only supplying specifically requested historical data.

17. A method according to any of Claims 13 to 16, further comprising using the data handling function to arrange the historical data into charts and to display simultaneously a plurality of charts arranged as an endless stream of moving graphical images forming a ticker tape on a user's screen.

18. A method according to Claim 17, wherein the step of using the handling function comprises configuring the user's screen to control the amount and type of historical data to be displayed.

19. A method according to any preceding claim, wherein the storing step is carried out on a daily basis.

20. A system for distributing performance data concerning a plurality of subjects from a distribution site to a user site, the system comprising:
a central database of performance data relating to each of the plurality of subjects,
storing means for storing gathered performance data concerning each of the subjects in the central database, the storing means being arranged to store the data to form a contiguous sequential block of historical data for each subject; and
read out means arranged to provide, on request from the user, a stream of historical data from the blocks in the central database such that a ticker tape of a plurality of graphical historical data charts can be displayed at the user's site, automatically and without user interaction.

21. A configurable ticker tape interface for providing performance data regarding a plurality of subjects stored in a remote database, the ticker tape interface being arranged to be configurable by the user to specify a subset of the plurality of subjects, to obtain current performance data and historical data from the remote database regarding the selected subset of subjects, and to generate user-controlled movable icons of the ticker tape interface, each icon representing the current performance data and historical data for selected subject in a graphical format.

22. A graphical user interface comprising:
processing means for obtaining updated information from a distribution database regarding a plurality of subjects and processing the obtained information to display a moving set of graphical images, each image representing current performance data and historical data for a given subject; and
selecting means for creating a user selection, the selecting means being arranged to configure the processing means to obtain information for a selection of the plurality of subjects stored in the distribution database.

23. A graphical user interface according to Claim 22, further comprising selection means, operable by the user, for selecting a time period of historical data, smaller than that stored in the distribution database for a given subject, which is to be displayed in the set of graphical images.

24. A graphical user interface according to Claim 22 or 23, further comprising control means, operable by the user, for altering the movement of the set of graphical images.
